# EUROPÄISCHE PATENTSCHRIFT

(11) **EP 3 678 863 B1**
(45) Veröffentlichungstag und Bekanntmachung des Hinweises auf die Patenterteilung: **23.03.2022**
(21) Anmeldenummer: 18734532.7
(22) Anmeldetag: 26.06.2018
(51) Int. Cl.: B41F 17/00, B41F 23/04, B41F 23/00, B41F 17/20, B41F 17/18, B41M 7/00, B41J 3/407, B41J 11/00, B29C 71/04, B29C 35/08, B29C 35/10

(54) **BEHANDLUNGSEINHEIT FÜR BEHÄLTER**
TREATMENT UNIT FOR CONTAINERS
UNITÉ DE TRAITEMENT DE RÉCIPIENTS

(30) Priorität: 04.09.2017 DE 102017215445
(43) Veröffentlichungstag der Anmeldung: 15.07.2020
(73) Patentinhaber: Krones AG, 93073 Neutraubling (DE)
(72) Erfinder: REGENSBURGER, Johannes, 93073 Neutraubling (DE)
(74) Vertreter: Grünecker Patent- und Rechtsanwälte PartG mbB
(86) Internationale Anmeldenummer: PCT/EP2018/067025
(87) Internationale Veröffentlichungsnummer: WO 2019/042622

(56) Entgegenhaltungen:
- WO-A1-96/33872
- FR-A1- 2 297 141
- US-A- 4 008 401
- US-A- 4 503 086
- US-A- 5 595 118

## Beschreibung

Die Erfindung betrifft eine Behandlungseinheit für Behälter gemäß dem Oberbegriff des Anspruchs 1, wie aus der Schrift US 4008401 A bekannt, sowie eine Direktdruckmaschine für Behälter mit der Behandlungseinheit.

Behälter werden in Abfüllanlagen zunehmend mittels UV-reaktiven Tinten direkt bedruckt. Für die anschließende Weiterverarbeitung der Behälter werden die fertigen aber noch nicht ausreichend ausgehärteten Druckbilder vorzugsweise mit breitbandiger UV-Strahlung im UVC, UVB und UVA nachbehandelt und die Tinten dadurch zügig und vollständig ausgehärtet. Hierfür kommen beispielsweise Quecksilberdampflampen in Frage.

Vorteilhaft bei Direktdruckmaschinen sind insbesondere die große Flexibilität und der geringe Aufwand bei der Anpassung an unterschiedliche Behälterformate. Dies wird durch eine weitgehend programmierte Positionierung und Arbeitsweise der Druckköpfe und Halterungen für die Behälter erzielt. Folglich sollte ein formatspezifisches Umrüsten möglichst auch bei zugeordneten Behandlungseinheiten vermieden werden. Die UV-Nachbehandlung von Aufdrucken in Bestrahlungstunneln erfolgt daher bei vergleichsweise großen Bestrahlungsabständen, die sich prinzipiell für unterschiedlich dimensionierte Behälter gleichermaßen eignen.

Nachteilig hierbei ist, dass aufgrund unvermeidlicher Reflexionen an Behältern, Transportmitteln oder dergleichen Maschinenteilen unkontrolliert vagabundierende Behandlungsstrahlung auftritt, die sich aufgrund der großen Bestrahlungsabstände und wechselnden Behälterformate schwierig und oftmals nur unzureichend im Bestrahlungstunnel auslöschen lässt. Folglich können durch den Eingang und Ausgang des Bestrahlungstunnels für den Arbeitsschutz relevante Strahlungsmengen austreten. Diese sind auf ein für Personal unschädliches und mit Arbeitsschutzverordnungen vereinbares Ausmaß zu begrenzen.

Insbesondere für eine Aushärtung UV-reaktiver Druckfarben (Tinten) auf Behältern sind herkömmliche Strahlungsbarrieren, wie beispielsweise Vorhänge und Bürsten, nicht praktikabel, da sie das noch nicht vollständig ausgehärtete Druckbild verwischen können. Zudem unterliegen solche Strahlungsbarrieren einer vergleichsweise hohen Abnutzung.

Es besteht daher der Bedarf für diesbezüglich verbesserte Behandlungseinheiten, insbesondere solchen zur UV-Nachbehandlung direkt bedruckter Behälter, mit dem Ziel, Behandlungsstrahlung ausreichend auszulöschen oder abzuschwächen, so dass die außerhalb der Behandlungseinheit resultierenden Bestrahlungsstärken unterhalb der zulässigen Grenzwerte bleiben. Dabei soll ein Umrüsten der Behandlungseinheit beim Formatwechsel möglichst ebenso vermieden werden wie ein Verschleiß von Strahlbarrieren.

Die gestellte Aufgabe wird mit einer Behandlungseinheit gemäß Anspruch 1 gelöst. Demnach dient diese insbesondere zur UV-Nachbehandlung direkt bedruckter Behälter. Die Behandlungseinheit umfasst einen Bestrahlungstunnel mit einem Transportmittel für die Behälter und mit entlang des Transportmittels angeordneten Lampen zur UV-Bestrahlung der Behälter. Ferner umfasst die Behandlungseinheit einen eingangsseitigen Sichtschutztunnel, der an den Bestrahlungstunnel anschließt und eine von einer Transportrichtung im Anschlussbereich zum Bestrahlungstunnel abweichende Einlaufrichtung für die Behälter aufweist, und einen ausgangsseitigen Sichtschutztunnel, der an den Bestrahlungstunnel anschließt und eine von einer Transportrichtung im Anschlussbereich zum Bestrahlungstunnel abweichende Auslaufrichtung für die Behälter aufweist.

Dadurch kann aus dem Bestrahlungstunnel austretende Behandlungsstrahlung nicht oder nur in vernachlässigbarem Ausmaß auf direktem Wege zum einlaufseitigen Eingang und zum auslaufseitigen Ausgang der Sichtschutztunnel vordringen und in die Umgebung der Behandlungseinheit austreten. Stattdessen trifft aus dem Bestrahlungstunnel stammende Behandlungsstrahlung zunächst auf wenigstens einen Innenwandbereich des Sichtschutztunnels oder dergleichen Struktur, an der Behandlungsstrahlung absorbiert und gegebenenfalls anteilig diffus reflektiert wird. Folglich lässt die Emission von Behandlungsstrahlung aus der Behandlungseinheit ohne Kontakt zu den Behältern wirksam unterdrücken. Vorzugsweise gibt es dann keine durchgehende Sichtachse vom einlaufseitigen Eingang und/oder auslaufseitigen Ausgang des jeweiligen Sichtschutztunnels in das Innere des Bestrahlungstunnels.

Der Sichtschutztunnel umfasst einen Eingang und einen Ausgang für die Behälter, wobei der Eingang und der Ausgang mit einem Winkelversatz von 45° zueinander angeordnet sind. Dadurch lässt sich auch bei einer vergleichsweise kompakten Bauweise des Sichtschutztunnels eine ausreichende Absorption vagabundierender Behandlungsstrahlung an den Innenwänden oder der gleichen Strukturen des Sichtschutztunnels erzielen. Ein Winkelversatz von 45° eignet sich ebenfalls für eine insgesamt parallele oder orthogonale Ausrichtung der Einlaufrichtung in die Behandlungseinheit bezüglich der Auslaufrichtung aus der Behandlungseinheit.

Vorzugsweise ist der einlaufseitige Eingang des Sichtschutztunnels bzw. der auslaufseitige Ausgang des Sichtschutztunnels als Öffnung mit vorgegebener lichter Weite ausgebildet, und der Sichtschutztunnel schließt derart strahlbegrenzend an den Bestrahlungstunnel an, dass es keine durchgehende Sichtachse durch die Öffnung zu den Lampen im Bestrahlungstunnel gibt. Dies ermöglicht eine besonders sichere Unterdrückung unerwünscht vagabundierender Behandlungsstrahlung, insbesondere solcher, die auf direktem Wege von den Lampen zum Auge eines Betrachters gelangen könnte.

Erfindungsgemäß ist in dem Sichtschutztunnel ein Transportmittel mit einer gekrümmten Transportbahn für die Behälter ausgebildet. Das Transportmittel ist ein Förderband mit gekrümmtem Verlauf, das direkt an den Bestrahlungstunnel anschließt oder durch diesen verläuft. Somit lässt sich ein schonender und gleichmäßiger Behältertransport erzielen, obwohl die Transportrichtung im Anschlussbereich von der Einlaufrichtung bzw. Auslaufrichtung der Behälter abweicht.

Vorzugsweise ist im Sichtschutztunnel wenigstens eine Lichtfalle mit einer Vielzahl von Absorptionslamellen vorhanden. Dadurch lässt sich insbesondere zuvor reflektierte Behandlungsstrahlung effektiv auslöschen.

Vorzugsweise sind die Absorptionslamellen beidseitig der Transportbahn angeordnet und überlappen in einem Bereich oberhalb der Behälter zur Transportbahn hin labyrinthartig. Dadurch lässt sich die Auslöschung vagabundierender Behandlungsstrahlung weitgehend unabhängig vom Behälterformat optimieren.

Vorzugsweise weisen die Absorptionslamellen und/oder Innenwände des Sichtschutztunnels einen Absorptionsgrad a von mindestens 75 %, insbesondere für die Behandlungsstrahlung, auf. Dadurch lassen sich Mehrfachreflexionen der Behandlungsstrahlung wirksam abschwächen / unterdrücken.

Vorzugsweise umfasst der Sichtschutztunnel eine Seitenwand mit einer darin ausgebildeten Revisionstür oder Revisionsklappe. Dies ermöglicht einen einfachen Zugang zum Transportmittel, zu gegebenenfalls umgefallenen Behältern, zu im Sichtschutztunnel vorhandenen Absorptionslamellen oder dergleichen.

Vorzugsweise sind dann an der Revisionstür Absorptionslamellen insbesondere lösbar befestigt. Sollte ein Umrüsten bei einem Formatwechsel nötig werden, so lässt sich dies durch Austausch der Absorptionslamellen dann auf besonders einfache Weise durchführen.

Vorzugsweise ist die Revisionstür oder Revisionsklappe dann auf der Außenseite der gekrümmten Transportbahn für die Behälter angeordnet. Dies erleichtert den Zugang zum Sichtschutztunnel für Bedienpersonal.

Vorzugsweise sind die Lampen im Bestrahlungstunnel zur Härtung UV-reaktiver Aufdrucke auf den Behältern ausgebildet. Das heißt, die Lampen strahlen Licht mit einem dafür geeigneten Emissionsspektrum und mit einer geeigneten Helligkeit / Lichtstärke im UVC und/oder UVB und/oder UVA ab.

Vorzugsweise sind die Transportmittel des Bestrahlungstunnels und des wenigstens einen Sichtschutztunnels in Form eines durchgehenden Förderbands für die Behälter ausgebildet. Das Förderband hat dann beispielsweise einen im Wesentlichen S-förmigen Verlauf mit einem linearen Mittelstück.

Die gestellte Aufgabe wird ebenso mit einer Direktdruckmaschine für Behälter gelöst, die Druckaggregate zum Aufdrucken UV-härtender Druckfarbe (Tinte) auf die Behälter umfasst sowie eine stromabwärts der Druckaggregate angeordnete Behandlungseinheit gemäß wenigstens einer der voranstehend beschriebenen Ausführungsformen.

Eine bevorzugte Ausführungsform der Erfindung ist zeichnerisch dargestellt. Es zeigen:
- Fig. 1: einen schematischen Grundriss der Behandlungseinheit;
- Fig. 2: einen schematischen Querschnitt durch den Sichtschutztunnel; und
- Fig. 3: eine schematische Draufsicht auf eine Direktdruckmaschine mit der Behandlungseinheit und alternative Aufstellungsvarianten der Behandlungseinheit.

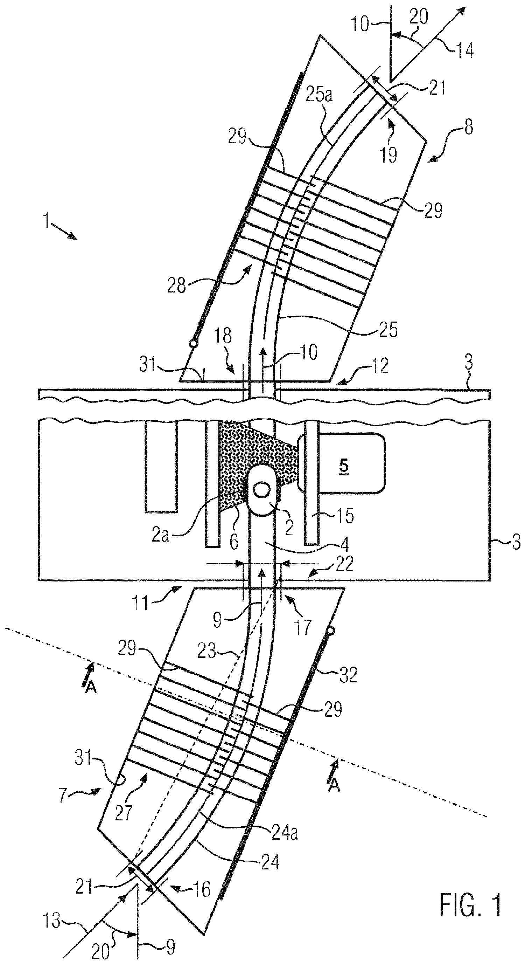

Wie die Fig. 1 in schematischer Draufsicht ins Innere der Behandlungseinheit 1 für Behälter 2 erkennen lässt, umfasst die Behandlungseinheit 1 einen Bestrahlungstunnel 3 mit einem Transportmittel 4 für die Behälter 2 und mit entlang des Transportmittels 4 angeordneten Lampen 5 (nur eine davon dargestellt) zur Bestrahlung der Behälter 2 mit einer Behandlungsstrahlung 6. Diese ist insbesondere UV-Licht zur Aushärtung UV-reaktiver Druckfarben (Tinten) 2a auf den Behältern 2.

Die Behandlungseinheit 1 umfasst ferner sowohl einen einlaufseitigen Sichtschutztunnel 7 als auch einen auslaufseitigen Sichtschutztunnel 8, die jeweils an den Bestrahlungstunnel 3 anschließen und eine von einer Transportrichtung 9, 10 im jeweiligen Anschlussbereich 11, 12 zum Bestrahlungstunnel 3 abweichende Einlaufrichtung 13 und Auslaufrichtung 14 für die Behälter 2 aufweisen.

Im Bestrahlungstunnel 3 sind ferner flüssigkeitsgekühlte Kühlkörper 15 vorhanden, die zwischen den Lampen 5 zur Innenraumkühlung des Bestrahlungstunnels 3 angeordnet sind.

Wie die Fig. 1 ferner erkennen lässt, umfasst der Sichtschutztunnel 7 einen einlaufseitigen Eingang 16 für die Behälter 2 und einen Ausgang 17 für die Behälter 2 zum Anschluss an den Bestrahlungstunnel 3. Analog dazu umfasst der Sichtschutztunnel 8 einen Eingang 18 für die Behälter 2 zum Anschluss an den Bestrahlungstunnel 3 und einen auslaufseitigen Ausgang 19 für die Behälter 2.

Einlaufseitig sind der Eingang 16 und der Ausgang 17, und somit die Einlaufrichtung 13 und die Transportrichtung 9 der Behälter 2, in einem Winkelversatz 20 von 45° zueinander angeordnet. Gleiches gilt auslaufseitig für den Eingang 18 und den Ausgang 19, und somit für die Transportrichtung 10 und die Auslaufrichtung 14.

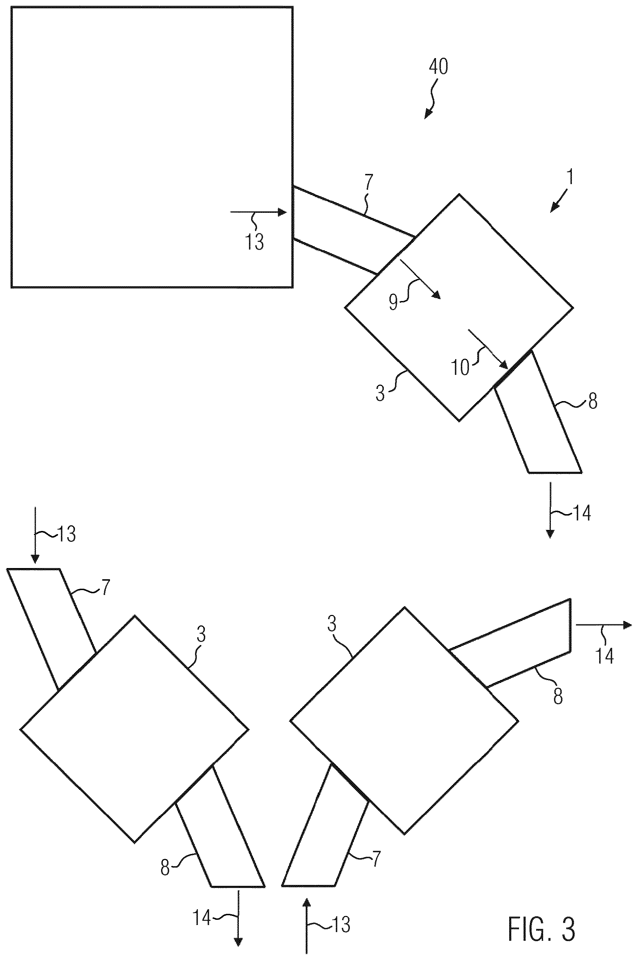

Der Winkelversatz 20 beträgt zugunsten einer effektiven Auslöschung vagabundierender Behandlungsstrahlung 6 bei gleichzeitig möglichst kompakten Abmessungen der Sichtschutztunnel 7, 8 wenigstens 30°. Ein Winkelversatz 20 von 45° eignet sich zusätzlich für unterschiedliche Aufstellungsvarianten mit zueinander paralleler oder orthogonaler Einlaufrichtung 13 und Auslaufrichtung 14, siehe auch die Fig. 3.

Der einlaufseitige Eingang 16 und der auslaufseitige Ausgang 19 sind als Öffnungen mit der größten lichten Weite 21 ausgebildet. Ferner sind beide Sichtschutztunnel 7, 8 strahlbegrenzend an den Bestrahlungstunnel 3 angeschlossen, beispielsweise durch Abtrennung des Bestrahlungstunnels 3 von den Sichtschutztunneln 7, 8 mittels geeigneter Zwischenwände 22. Dadurch werden gedachte Sichtachsen 23 durch die Öffnung des einlaufseitigen Eingangs 16 bzw. des auslaufseitigen Ausgangs 19 bis zu den Lampen 5 unterbunden. In der Fig. 1 ist zur Veranschaulichung angedeutet, wie eine derartige Sichtachse 23 aussehen könnte.

Wie die Fig. 1 ferner erkennen lässt, umfasst jeder Sichtschutztunnel 7, 8 ein Transportmittel 24, 25 mit einer gekrümmten Transportbahn 24a, 25a für die Behälter 2. Vorzugsweise sind die Transportmittel 4, 24 und 25 als ein durchgehendes Förderband für den stehenden Transport der Behälter 2 ausgebildet.

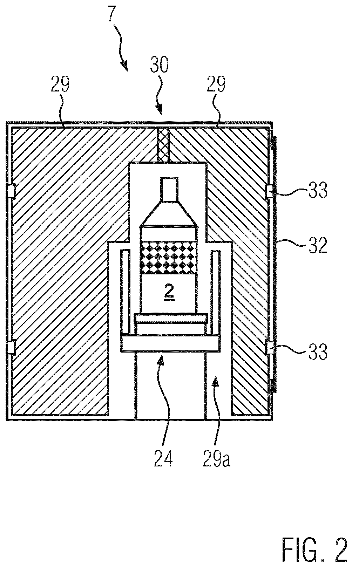

Die Sichtschutztunnel 7, 8 umfassen ferner Lichtfallen 27, 28 mit einer Vielzahl von Absorptionslamellen 29. Die Absorptionslamellen 29 sind dann vorzugsweise beidseitig der Transportbahnen 24a, 25a angeordnet und überlappen in einem Bereich 30 oberhalb der Behälter 2 zur jeweiligen Transportbahn 24a, 25a hin, siehe auch die Fig. 2. Vorzugsweise ist eine Vielzahl überlappender Absorptionslamellen 29 entlang der Transportbahn 24a, 25a hintereinander angeordnet. Dazwischen sind dann quer verlaufende Absorptionsräume ausgebildet in Anlehnung an die Gänge eines Labyrinths, siehe die Fig. 1.

Wie die Fig. 2 erkennen lässt, können die Konturen der Absorptionslamellen 29 zur Transportbahn 24a, 25a hin näherungsweise als Negativ einer Behälterkontur ausgebildet sein und umfassen vorzugsweise ferner eine Aussparung 29a für das Transportmittel 24, 25.

Die Absorptionslamellen 29 und/oder sonstige Innenwände 31 der Sichtschutztunnel 7, 8 sind vorzugsweise mit einer die Behandlungsstrahlung 6 absorbierenden Farbschicht versehen oder entsprechend absorbierend eloxiert, so dass ein Absorptionsgrad a von mindestens 75 % für die Behandlungsstrahlung 6 erzielt wird, insbesondere in einem Spektralbereich von 200 bis 450 nm.

In der Fig. 1 ist ferner zu erkennen, dass die Sichtschutztunnel 7, 8 auf der Außenseite der gekrümmten Transportbahn 24a, 25a vorzugsweise eine Revisionsklappe oder Revisionstür 32 aufweisen. Diese kann zum Einen der Befestigung 33 von Absorptionslamellen 29 dienen und ermöglicht andererseits einen einfachen Zugang für Bedienpersonal zum Bereich der Transportmittel 24, 25. Die Revisionsklappe oder Revisionstür 32 ist vorzugsweise automatisch gesteuert verriegelt, sobald die Lampen 5 in Betrieb genommen werden.

Sofern Absorptionslamellen 29 bei einem Formatwechsel ausgetauscht werden sollen, lässt sich dies auf besonders einfache Weise durch eine lösbare Befestigung 33 an der Revisionstür 32 bewerkstelligen.

Die Fig. 3 verdeutlicht, dass der erfindungsgemäße Winkelversatz 20 von 45° zwischen der Einlaufrichtung 13 und der Transportrichtung 9 sowie zwischen der Transportrichtung 10 und der Auslaufrichtung 14 optimal ist für eine flexible Anpassung der Einlaufrichtung 13 und Auslaufrichtung 14 zueinander. Der Bestrahlungstunnel 3 und die Sichtschutztunnel 7, 8 sind zu diesem Zweck für verschiedene Maschinenaufstellungen modular flexibel miteinander kombinierbar.

Die Sichtschutztunnel 7, 8 haben vorzugsweise einen im Wesentlichen trapezförmigen Grundriss. Die Fig. 3 verdeutlicht schematisch, dass damit sowohl unterschiedliche Aufstellungsvarianten als auch eine insgesamt kompakte Bauweise der Behandlungseinheit 1 mit je einem Bestrahlungstunnel 3 und zwei Sichtschutztunneln 7, 8 möglich ist.

Entsprechend ließen sich die Sichtschutztunnel 7, 8 auch an andere Behandlungseinheiten mit für den Arbeitsschutz relevanter Behandlungsstrahlung anschließen (nicht dargestellt), um die beschriebenen Vorteile zu erzielen.

Mit den Sichtschutztunneln 7, 8 lassen sich sowohl direkt von den Lampen 5 einfallende Anteile der Behandlungsstrahlung 6 nach außen hin unterdrücken als auch reflektierte Anteile, gegebenenfalls nach anteiliger Absorption und Mehrfachreflexion in den Sichtschutztunneln 7, 8 und insbesondere an den Absorptionslamellen 29 der Lichtfallen 27, 28.

Die Behandlungseinheit 1 ist vorzugsweise ein Bestandteil einer Direktdruckmaschine 40 mit an sich bekannten Druckaggregaten zum Aufdrucken der UV-härtenden Druckfarbe (Tinte) 2a auf die Behälter 2. Die UV-härtende Druckfarbe 2a kann dann unmittelbar anschließend im Bestrahlungstunnel 3 der Behandlungseinheit 1 mit Hilfe der Lampen 5 für die weitere Verarbeitung / Handhabung der Behälter 2 vollständig ausgehärtet werden.

## Patentansprüche

1. Behandlungseinheit (1) für Behälter (2), insbesondere zur UV-Nachbehandlung direkt bedruckter Behälter (2), umfassend:
- einen Bestrahlungstunnel (3) mit einem Transportmittel (4) für die Behälter (2) und mit entlang des Transportmittels (4) angeordneten Lampen (5) zur UV-Bestrahlung der Behälter (2); und
- einen eingangsseitigen Sichtschutztunnel (7) und einen ausgangsseitigen Sichtschutztunnel (8), die jeweils an den Bestrahlungstunnel (3) anschließen und eine von einer Transportrichtung (9, 10) im Anschlussbereich (11, 12) zum Bestrahlungstunnel (3) abweichende Einlaufrichtung (13) und Auslaufrichtung (14) für die Behälter (2) aufweisen, wobei in den Sichtschutztunneln (7, 8) jeweils ein Transportmittel (24, 25) mit einer gekrümmten Transportbahn (24a, 25a) für die Behälter (2) ausgebildet ist,
**dadurch gekennzeichnet dass**
das Transportmittel (24, 25) ein Förderband mit gekrümmtem Verlauf ist und direkt an den Bestrahlungstunnel (3) anschließt oder durch diesen verläuft, wobei die Einlaufrichtung (13) und die Auslaufrichtung (14) in einem Winkelversatz (20) von 45° zur Transportrichtung (9, 10) im jeweiligen Anschlussbereich (11, 12) verläuft.

2. Behandlungseinheit nach Anspruch 1, wobei der Sichtschutztunnel (7, 8) einen Eingang (16, 18) und einen Ausgang (17, 19) für die Behälter umfasst, die in einem Winkelversatz (20) von mindestens 30°, insbesondere von 45°, zueinander angeordnet sind.

3. Behandlungseinheit nach Anspruch 2, wobei der einlaufseitige Eingang (16) und/oder der auslaufseitige Ausgang (18) als Öffnung mit der größten lichten Weite (21) des Sichtschutztunnels (7, 8) ausgebildet sind und der Sichtschutztunnel (7, 8) strahlbegrenzend an den Bestrahlungstunnel (3) anschließt, derart dass es keine durchgehende Sichtachse (23) durch die Öffnung zu den Lampen (5) gibt.

4. Behandlungseinheit nach wenigstens einem der vorigen Ansprüche, wobei in dem Sichtschutztunnel (7, 8) eine Lichtfalle (27, 28) mit einer Vielzahl von Absorptionslamellen (29) vorhanden ist.

5. Behandlungseinheit nach Anspruch 4, wobei die Absorptionslamellen (29) beidseitig der Transportbahn (24a, 25a) angeordnet sind und in einem Bereich (30) oberhalb der Behälter (2) zur Transportbahn (24a, 25a) hin labyrinthartig überlappen.

6. Behandlungseinheit nach Anspruch 5 oder 4, wobei die Absorptionslamellen (29) und/oder Innenwände (31) des Sichtschutztunnels (7, 8) einen Absorptionsgrad von mindestens 75% aufweisen, insbesondere für einen Spektralbereich von 200 bis 450 nm.

7. Behandlungseinheit nach wenigstens einem der vorigen Ansprüche, wobei der Sichtschutztunnel (7, 8) eine Seitenwand mit einer darin ausgebildeten Revisionstür (32) oder Revisionsklappe umfasst.

8. Behandlungseinheit nach Anspruch 7, wobei an der Revisionstür (32) Absorptionslamellen (29) insbesondere lösbar befestigt sind.

9. Behandlungseinheit nach Anspruch 8 oder 7, wobei die Revisionstür (32) auf der Außenseite der gekrümmten Transportbahn (24a, 25a) für die Behälter (2) angeordnet ist.

10. Behandlungseinheit nach einem der Ansprüche 7 bis 9, wobei die Revisionstür (32) mittels einer an den Einschaltzustand der Lampen (5) gekoppelten Sicherheitseinrichtung verriegelt ist.

11. Behandlungseinheit nach wenigstens einem der vorigen Ansprüche, wobei die Lampen (5) zur UV-Härtung UV-reaktiver Aufdrucke auf den Behältern (2) ausgebildet sind.

12. Behandlungseinheit nach wenigstens einem der vorigen Ansprüche, wobei die Transportmittel (4, 24, 25) des Bestrahlungstunnels (3) und des Sichtschutztunnels (7, 8) in Form eines durchgehenden Förderbands für die Behälter (2) ausgebildet sind.

13. Direktdruckmaschine (40) für Behälter (2), mit Druckaggregaten zum Aufdrucken UV-härtender Druckfarbe (2a) auf die Behälter (2) und mit einer stromabwärts der Druckaggregate angeordneten Behandlungseinheit (1) nach wenigstens einem der vorigen Ansprüche.

## Claims

1. Treatment unit (1) for containers (2), in particular for UV post-treatment of directly printed containers (2), comprising:
- an irradiation tunnel (3) having a transport means (4) for the containers (2) and having lamps (5) arranged along the transport means (4) for UV irradiation of the containers (2); and
- an entry-side screening tunnel (7) and an exit-side screening tunnel (8), which each connect to the irradiation tunnel (3) and have an inlet direction (13) that deviates from a transport direction (9, 10) in the connection region (11, 12) to the irradiation tunnel (3) and an outlet direction (14) for the containers (2), a transport means (24, 25) having a curved transport path (24a, 25a) for the containers (2) being formed in each of the screening tunnels (7, 8),
**characterised in that**
the transport means (24, 25) is a curved conveyor belt that is directly connected to the irradiation tunnel (3) or extends through said tunnel, the inlet direction (13) and the outlet direction (14) extending at an angular offset (20) of 45° to the transport direction (9, 10) in the respective connection regions (11, 12).

2. Treatment unit according to claim 1, wherein the screening tunnel (7, 8) comprises an entrance (16, 18) and an exit (17, 19) for the containers which are arranged at an angular offset (20) of at least 30°, in particular 45°, with respect to one another.

3. Treatment unit according to claim 2, wherein the inlet-side entrance (16) and/or the outletside exit (18) are designed as an opening with the greatest inner diameter (21) of the screening tunnel (7, 8) and the screening tunnel (7, 8) connects to the irradiation tunnel (3) in a beamlimiting manner in such a way that there is no continuous visual axis (23) through the opening to the lamps (5).

4. Treatment unit according to at least one of the preceding claims, wherein there is a light trap (27, 28) having a plurality of absorption lamellae (29) in the screening tunnel (7, 8).

5. Treatment unit according to claim 4, wherein the absorption lamellae (29) are arranged on both sides of the transport path (24a, 25a) and overlap in a labyrinth-like manner in a region (30) above the containers (2) towards the transport path (24a, 25a).

6. Treatment unit according to either claim 5 or claim 4, wherein the absorption lamellae (29) and/or inner walls (31) of the screening tunnel (7, 8) have an absorptance of at least 75%, in particular for a spectral region of 200 to 450 nm.

7. Treatment unit according to at least one of the preceding claims, wherein the screening tunnel (7, 8) comprises a side wall having an inspection door (32) or inspection flap formed therein.

8. Treatment unit according to claim 7, wherein absorption lamellae (29) are fastened, in particular detachably, to the inspection door (32).

9. Treatment unit according to either claim 8 or claim 7, wherein the inspection door (32) is arranged on the outside of the curved transport path (24a, 25a) for the containers (2).

10. Treatment unit according to any of claims 7 to 9, wherein the inspection door (32) is locked by means of a safety device which is coupled to the switched-on state of the lamps (5).

11. Treatment unit according to at least one of the preceding claims, wherein the lamps (5) are designed for UV-curing of UV-reactive imprints on the containers (2).

12. Treatment unit according to at least one of the preceding claims, wherein the transport means (4, 24, 25) of the irradiation tunnel (3) and of the screening tunnel (7, 8) are designed in the form of a continuous conveyor belt for the containers (2).

13. Direct printing machine (40) for containers (2), comprising printing units for printing UV-curing printing ink (2a) onto the containers (2) and comprising a treatment unit (1) according to at least one of the preceding claims arranged downstream of the printing units.

## Revendications

1. Unité de traitement (1) pour des récipients (2), en particulier pour le posttraitement UV de récipients (2) directement imprimés, comprenant:
- un tunnel d'irradiation (3) avec un moyen de transport (4) destiné aux récipients (2) et avec des lampes (5) agencées le long du moyen de transport (4) en vue de l'irradiation UV des récipients (2); et
- un tunnel de protection visuelle (7) situé côté entrée et un tunnel de protection visuelle (8) situé côté sortie, qui se raccordent respectivement au tunnel d'irradiation (3) et présentent pour les récipients (2) une direction d'entrée (13) et une direction de sortie (14) qui s'écartent d'une direction de transport (9, 10) dans la zone de raccordement (11, 12) au tunnel d'irradiation (3), dans laquelle un moyen de transport (24, 25) avec une voie de transport (24a, 25a) incurvée et destinée aux récipients (2) est respectivement formé dans les tunnels de protection visuelle (7, 8), **caractérisée en ce que**
le moyen de transport (24, 25) est une bande transporteuse à trajectoire incurvée et se raccorde directement au tunnel d'irradiation (3) ou le traverse, dans laquelle la direction d'entrée (13) et la direction de sortie (14) s'étendent avec un décalage angulaire (20) de 45° par rapport à la direction de transport (9, 10) dans la région de raccordement (11, 12) respective.

2. Unité de traitement selon la revendication 1, dans laquelle le tunnel de protection visuelle (7, 8) comprend une entrée (16, 18) et une sortie (17, 19) destinées aux récipients et agencées avec un décalage angulaire (20) d'au moins 30°, en particulier de 45°, l'une par rapport à l'autre.

3. Unité de traitement selon la revendication 2, dans laquelle l'entrée (16) située côté entrée et/ou la sortie (18) située côté sortie sont réalisées sous la forme d'une ouverture dont le diamètre intérieur maximal (21) est celui du tunnel de protection (7, 8) et le tunnel de protection visuelle (7, 8) se raccorde au tunnel d'irradiation (3) de manière à limiter l'irradiation de telle manière qu'il n'y ait pas d'axe de vision (23) continu passant par l'ouverture en direction des lampes (5).

4. Unité de traitement selon au moins l'une quelconque des revendications précédentes, dans laquelle un piège à lumière (27, 28) avec une pluralité de lamelles d'absorption (29) est fourni dans le tunnel de protection visuelle (7, 8).

5. Unité de traitement selon la revendication 4, dans laquelle les lamelles d'absorption (29) sont agencées des deux côtés de la voie de transport (24a, 25a) et se chevauchent de manière labyrinthique vers la voie de transport (24a, 25a) dans une région (30) située au-dessus des récipients (2).

6. Unité de traitement selon la revendication 5 ou 4, dans laquelle les lamelles d'absorption (29) et/ou les parois intérieures (31) du tunnel de protection visuelle (7, 8) présentent un degré d'absorption d'au moins 75%, en particulier pour une plage spectrale comprise entre 200 et 450 nm.

7. Unité de traitement selon au moins l'une quelconque des revendications précédentes, dans laquelle le tunnel de protection visuelle (7, 8) comprend une paroi latérale au sein de laquelle est formée une porte de visite (32) ou un clapet de visite.

8. Unité de traitement selon la revendication 7, dans laquelle des lamelles d'absorption (29) sont fixées, en particulier de manière amovible, à la porte de visite (32).

9. Unité de traitement selon la revendication 1, **caractérisée en ce que** la porte de visite (32) est agencée sur le côté extérieur de la voie de transport (24a, 25a) incurvée destinée aux récipients (2).

10. Unité de traitement selon l'une quelconque des revendications 7 à 9, dans laquelle la porte de visite (32) est verrouillée au moyen d'un dispositif de sécurité couplé à l'état allumé des lampes (5).

11. Unité de traitement selon au moins l'une quelconque des revendications précédentes, dans laquelle les lampes (5) sont conçues pour le durcissement aux UV d'impressions réagissant aux UV sur les récipients (2).

12. Unité de traitement selon au moins l'une quelconque des revendications précédentes, dans laquelle les moyens de transport (4, 24, 25) du tunnel d'irradiation (3) et du tunnel de protection visuelle (7, 8) sont réalisés sous la forme d'une bande transporteuse continue destinée aux récipients (2).

13. Machine d'impression directe (40) pour récipients (2), comprenant des groupes d'impression permettant d'imprimer de l'encre d'impression durcissant aux UV (2a) sur les récipients (2), et comprenant une unité de traitement (1) selon au moins l'une quelconque des revendications précédentes agencée en aval des groupes d'impression.
